# EUROPEAN PATENT SPECIFICATION

(11) **EP 4 027 256 B1**
(45) Date of publication and mention of the grant of the patent: **27.05.2026**
(21) Application number: 21165715.0
(22) Date of filing: 29.03.2021
(51) Int. Cl.: G06F 21/55, G06F 21/57, G06F 11/34, G06F 11/30, H04L 9/40

(54) **SINGLE AGENT FOR LOGS, METRICS, TRACES, SYNTHETICS, SECURITY, AND END POINT MONITORING**
EINZELAGENT FÜR PROTOKOLL-, METRIK-, SPUR-, SYNTHETIK-, SICHERHEITS- UND ENDPUNKTÜBERWACHUNG
AGENT UNIQUE POUR LES JOURNAUX, LES MESURES, LES TRACES, LES INFORMATIONS SYNTHÉTIQUES, LA SÉCURITÉ ET LA SURVEILLANCE DES POINTS D'EXTRÉMITÉ

(30) Priority: 06.01.2021 US 202117143014
(43) Date of publication of application: 13.07.2022
(73) Proprietor: Elasticsearch B.V., Mountain View, California 94040 (US)
(72) Inventor: RUFLIN, Nicolas, Mountain View, California 94040 (US); PELLERIN, Pier-Hugues, Mountain View, California 94040 (US)
(74) Representative: Weal, Emily Teresa

(56) References cited:
- US-A1- 2020 328 936

## Description

### CROSS-REFERENCE TO RELATED APPLICATION(S)

This application claims priority from U.S. Application Serial No. 17/143,014, filed on January 6, 2021, which is a continuation-in-part of U.S. Application Serial No. 16/379,356, filed on April 9, 2019, entitled "Data Shipper Agent Management and Configuration Systems and Methods". This application is also related to U.S. Application Serial No. 17/143,881, filed on January 7, 2021, entitled "Single Bi-Directional Point of Policy Control, Administration, Interactive Queries and Security Protections" (Atty. Docket Number PA9697US).

### FIELD

The present disclosure is directed to systems and methods for a single agent to centrally manage client software agents on edge node. The agents of the edge node executes either on edge node or on a centralized location for more than one edge node. These agents generate information and status data including data logs, metrics, traces of programs and processes, synthetics, and security information. In some embodiments, specifically configured graphical user interfaces (GUI) are provided that enable users to configure agents on the edge node through a standard schema implemented on a single agent server. Client software on the network coupled devices can include management of data shipper agents or other software installed on the client and access to application programming interfaces (API) for receiving configurations can be accomplished using a secure token exchange in some embodiments.

### BACKGROUND

One of the challenges of setting up and managing the logs, metrics, traces, synthetics, security, and other end point monitoring applications for numerous networked clients, is that each time that one of these streams is enabled, it can require new permissions by management to be installed or enabled. This process can take months which is both inconvenient, labor intensive, and can be costly if the need for the new stream is urgent. Further, each of these software agents on the edge node that produce these logs and streams of other information can utilizes a different control management schemas. The command line interface for each software agent has to be configured and enabled. What is needed is a single schema that can interface with the many client software agents on the edge node that provide logs, metrics, traces, synthetics, security, and other monitoring information.

US 2020/328936 Al is prior art.

### SUMMARY

The present invention is defined by the appended independent claims. Preferred embodiments are set forth in the dependent claims.

According to various embodiments, the present technology is directed to a method comprising: selecting software agents on the edge node and enrolling/enabling data shipper agents which are installed on edge nodes; configuring the software agents on the edge node and data shippers using a common schema on a single agent's application programing interface (API); receiving data from the software agents on the edge node and data shippers; and storing the data.

According to various embodiments, the present technology is directed to a system comprising: at least one agents on the edge node which can include a data shipper agent installed on at least one edge node, the at least one software application agent being configured to collect data from the at least one edge node and provide the same to a single server agent. The single agent has an application program interface (API) utilizing a common schema for the connection, enrollment, enabling, and management of software applications and data shippers. The enrollment of the software agents on the edge node which can include the data shipper agents can be executed through a token exchange process that includes the configuration of one or more tags for the at least one data shipper agent, each of the one or more tags being defined by one or more services provided by the least one data shipper agent, the one or more tags linking the one or more modules with the at least one data shipper agent.

According to various embodiments, the present technology is directed to a system comprising: software agents on the edge node that can include data shipper agents installed on an edge node, wherein each of the software application are configured to collect data from the edge node and provide the same to a single agent service provider system on an agent central management server. The server is configured to provide an application programing interface (API) with a common schema for configuration and management of the software agents on the edge node that can include data shipper agents.

### BRIEF DESCRIPTION OF THE DRAWINGS

The accompanying drawings, where like reference numerals refer to identical or functionally similar elements throughout the separate views, together with the detailed description below, are incorporated in and form part of the specification, and serve to further illustrate embodiments of concepts that include the claimed disclosure, and explain various principles and advantages of those embodiments.

The methods and systems disclosed herein have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.
FIG. 1 is a schematic diagram of an example architecture constructed in accordance with the present disclosure.
FIG. 2 is a signal flow diagram of an example token exchange enrollment process.
FIG. 3 is a flowchart of an example method of the present disclosure.
FIG. 4 is a schematic diagram of an example computer device that can be utilized to implement aspects of the present technology.

### DETAILED DESCRIPTION

The present disclosure relates generally to systems and methods that allow for a centralized management by a single management agent for the management and configuration of data shipper agents and other software agents on the edge node that generate logs, metrics, traces, synthetics, security and end point monitoring. The management agent of the single agent management server or service provider system, in some embodiments, is configured to be controlled by a graphical user interfaces (GUI) that enables users to configure edge node based software agents on the edge node and data shipper agents through a modularized interface using a common schema. Enrollment of data shipper agents or the remote software application and access to application programming interfaces (API) can be accomplished using a secure token exchange in some embodiments.

In general, a software agent and a data shipper agent is an object/service that is installed on an edge node of a network. In some instances, the data shipper agent is referred to as a beat or beats. The data shipper agent performs services at the edge node level and in some instances collects valuable data for use by a service provider system. More than one data shipper agent can be implemented on an edge node. Collectively, data shipper agents can transmit data from hundreds or thousands of machines and systems to service provider systems such as LogstashTM or ElasticsearchTM (e.g., components of the service provider system).

Data shipper agents reside on edge nodes, and in some embodiments with containers, or are deployed as functions. In some embodiments, data collected and assigned to the data shipper agents can be centralized in ElasticsearchTM. Data shipper agents can also ship collected data to LogstashTM for transformation and parsing.

To be sure, managing multiple data shipper agents is a complicated task, and central management as disclosed herein can be utilized to alleviate these problems by allowing data shipper agents to be configured by centrally using specifically configured GUIs and/or specifically configured API calls. Advantageously, the central management of data shipper agents allows for automatic reconfiguration of one or more data shipper agents on one or more edge nodes based on the configuration of one of the data shipper agents. That is, as configurations are modified for one data shipper agent, the resulting configuration changes can be used by the central management service to automatically reconfigure other data shipper agents. These and other aspects and advantages of the present disclosure are provided herein with reference to the collective drawings.

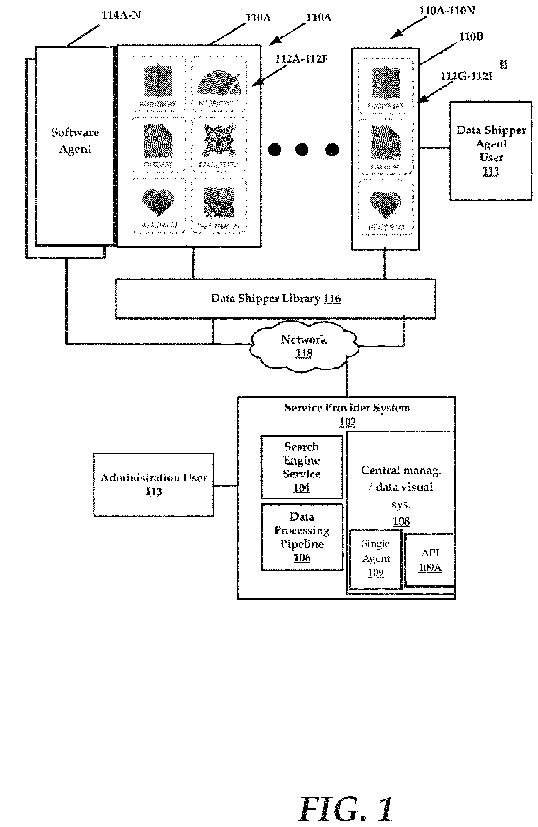

FIG. 1 is an example schematic diagram of an architecture for practicing aspects or embodiments of the present disclosure. The architecture comprises a service provider system 102 that comprises a search engine service 104, a data processing pipeline 106, and a central management and data visualization system 108 that can include a single agent 109 for management. In general, the service provider system 102 is configured to provide one or more services to network coupled 118 edge nodes 100 devices. These can include services such as search engine or data visualization services based on data collected by data shipper agents of the present disclosure. Alternatively, the system, the services can be software services that can include processing log, metrics, trace, synthetics, security and end point monitoring data.

The architecture also can comprise one or more edge nodes 110A-110N with one or more data shipper agents installed thereon. Additionally, the edge nodes can include a software agent on the edge node 114A-N that is managed by the agent 109. Note, while the agent on the edge node is shown residing in the edge node, this agent can reside in a centralized location such as the Service Provider System 102. In one example, edge node 110A has data shipper agents 112A-112F installed thereon, while edge node 110B has data shipper agents 112G-112I installed thereon. Each edge node can have more than one data shipper agent installed thereon. Some edge nodes may comprise only one data shipper agent. In some instances the data shipper agents can be selected and assigned to edge nodes from a data shipper library 116. Further, one or more the software service agents 114A-N can be installed on a node and be enabled, configured, and otherwise managed by the single agent 119 through the network 118.

In general, the data processing pipeline 106 ingests data from multiple sources such as the one or more data shipper agents simultaneously and transforms the collected data into a format that is utilizable by either the search engine service 104 and/or the data visualization system 108. Alternatively, the data from the data shipper agents and software agents on the edge node 114A-N can be transmitted to the agent 109 for processing, storage, and display. Components of the architecture can communicate through an example network 118 that can include any public and/or private network.

For context, the data shipper agents and software agent can each be configured to collect any one of a number of data types from the edge nodes. These data can include log file data, metric data, network data, event log data, metrics data, synthetics data, security data, audit data, uptime monitoring data, and/or serverless shipper data - just to name a few.

Generally, the central management and data visualization system 108 or single agent 109 is configured to provide a means for central management and configuration of the data shipper agents and/or software agents on the edge node on a node. In various embodiments, the management and configuration are accomplished through one or more GUIs interfacing with an application programmer interface 109A on the agent 109. In some embodiments, the GUIs allow for enrollment of data shipper agents and configuration of data shipper agents. Further, the GUIs can provide for the access to software agents on the edge node 114A-N and the configuration of the software services 114A.

This process enrolls a software agent on the edge node 114A -N and data shipper agents 110A-N with the central management and data visualization system 108 using the single agent 109 which implements a central management API 109A. In some embodiments, trust can be established between the data shipper agent 110A-N and the single agent 109. In some embodiments, trust is established through a secret token exchange process, as will be discussed in greater detail below. In some embodiments, after installation, the data shipper agent can communicate with the single agent 109 through an API through a token exchange process (disclosed in greater detail infra). After this exchange, trust is established and an access token is created by the single agent 109. The central management and data visualization system 108 provides this access token to the data shipper agent and the data shipper agent can utilize this access token for future calls to the central management and data visualization system 108.

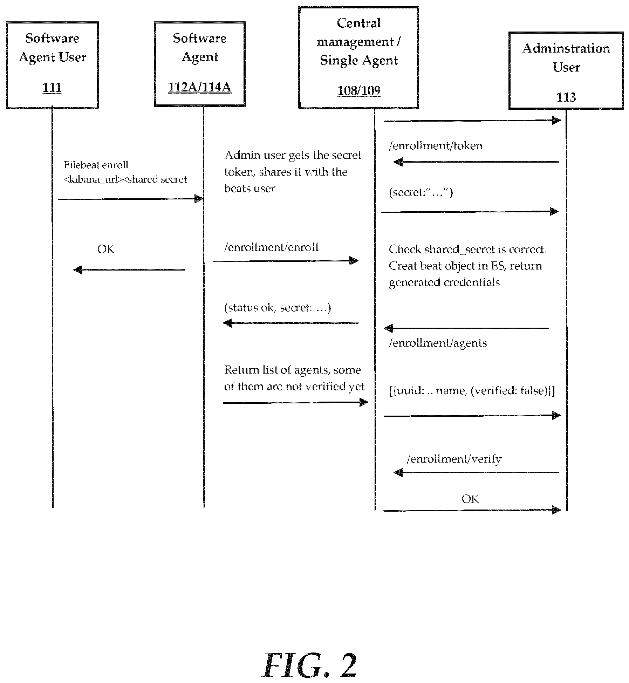

Referring now to FIG. 2, in some embodiments, enrollment is the process of establishing mutual trust between a data shipper agent and the agent 109 (see FIG. 1). Enrollment or connection generally precedes the data shipper agent or software agent being enabled to fetch configurations from the central management and data visualization system 108 or single agent 109.

In some embodiments, an administrator can confirm or verify the enrolled agents before the enrolled data shipper agent can fetch configurations from the central management and data visualization system 108 or single agent 109 and/or push collected data to the search engine service 104 and/or the data processing pipeline 106 or file storage(also see FIG. 1). As noted above, the enrollment process can be streamlined using a general enrollment command such as filebeat enroll <kibana_url> [shared secret]. In this example, a filebeat type of data shipper agent is enrolled and specifies a hostname URL "kibana_url". A shared secret is appended to the general enrollment command. In some embodiments, the enrollment process is initiated by a data shipper agent user 111.

The shared secret could include a token provided by an administration user. The shared secret token can be generated using any desired hashing or encryption function such as AES256 (advanced encryption standard). This shared secret token can be provided to an administration user 113 who in turn provides the share secret token to the data shipper agent user 111.

The data input into the encryption function can be randomly generated or selected by the central management and data visualization system 108. In some embodiments, the shared secret token is uniformly used across all data shipper agents. In other embodiments, the shared secret is unique for each data shipper agent, or a group of data shipper agents.

When manually enrolling a data shipper or software agent, the shared secret token is made available to read by the central management and data visualization system 108 through a GUI. The shared secret token can be generated on bootstrap, available from token API provided by the central management and data visualization system 108 or single agent 109. In some embodiments, the shared secret token is provided on a GUI provided by the central management and data visualization system 108. Next, the data shipper or software agent that has been installed on the edge node can request enrollment by the central management and data visualization system 108 or single agent 109 using the shared secret. It will be understood that in some embodiments, rather than using a shared secret token a whitelist. For example, the data shipper agent can be enrolled if included on an IP whitelist. That is, the central management and data visualization system 108 or single agent 109 maintains whitelists of IP addresses of edge nodes. These edge nodes are authorized such that any data shipper agent specifying an IP address included in the whitelist is automatically enrolled without token exchange.

When the central management and data visualization system 108 or single agent 109 receives the shared secret token, the central management and data visualization system 108 or single agent 109 can then create an object for the data shipper 110 or software agent 110. Initially, the central management and data visualization system 108 or single agent 109 marks this object as being unverified. This object can be created, for example at the search engine service 104 (see FIG. 1). In various embodiments, objects created for the search engine service 104 are tracked using a central management index. Each object can be associated with a unique user identifier.

The central management and data visualization system 108 or single agent 109 transmits credentials to the data shipper 110 or software agent 114 and the central management and data visualization system 108 or single agent 109 stores the credentials in a keystore (a keystore can also be maintained on the data shipper or software agent as well). It will be understood that the data shipper or software agent still does not have access to the configuration API provided by the central management and data visualization system 108.

The central management and data visualization system 108 or single agent 109 can check for newly enrolled data shipper or software agents on the edge node and verify the enrolled data shipper or software agents on the edge node. Once verified, access to configurations stored on the central management and data visualization system 108 or single agent 109 is granted to the data shipper or software agent. The data shipper or software agent can access configurations through the configuration API using the stored credentials provided by the central management and data visualization system 108 or single agent 109.

As noted above, in some embodiments, the enrollment and configuration access processes are entirely automated by the central management and data visualization system 108 or single agent 109. For example, the central management and data visualization system 108 deploys a script comprising credentials for a user of the central management and data visualization system 108 or single agent 109. The central management and data visualization system 108 or single agent 109 then retrieves a shared secret from a token API. The central management and data visualization system 108 deploys a data shipper or software agent and runs the data shipper or software agent enrollment command and passes the secret shared token. The central management and data visualization system 108 creates an object for the data shipper or software agent and identifies the data shipper or software agent as not verified. Credentials for the data shipper or software agent are returned to the data shipper or software agent, which stores them in a keystore. To be sure, at this point in the process the data shipper or software agent cannot access the configuration API. The deployment script obtains a unique user identifier for the data shipper agent and calls a verify API implemented by the central management and data visualization system 108 or single agent 109 to verify the data shipper or software agent.

In some embodiments an audit log is generated for authentication related events, and the same can be performed for enrollment and verification. These log related events can be stored in a file on the central management and data visualization system 108, ideally using a similar format as audit log file being used by the search engine service 104.

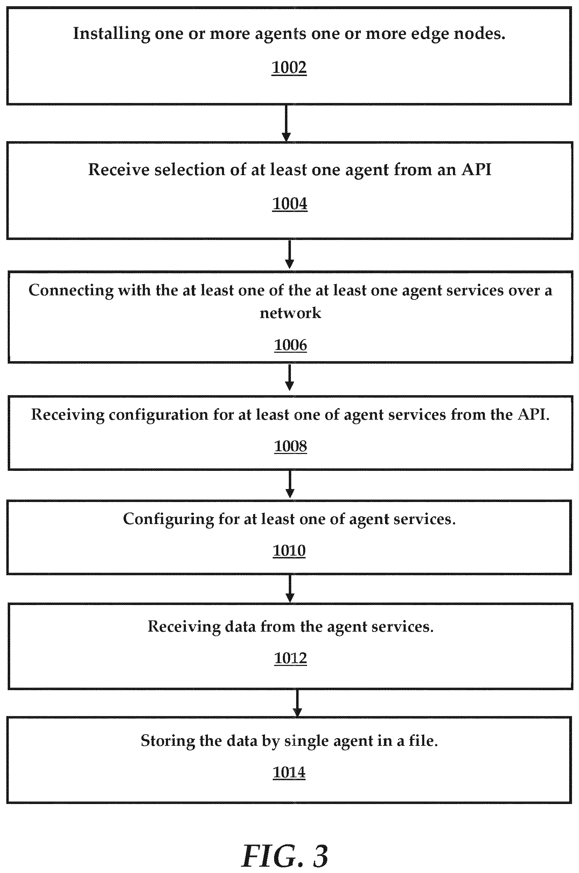

FIG. 3 is a flowchart of an example method that can be performed in accordance with the present disclosure. The method can include a step 1002 of installing one or more software agents on the edge node on one or more edge nodes, which can include data shipper agents. After installation, the method includes a step 1004 of the single agent of the service provider system receiving a selection of one or more software services. The single agent or service provider system includes an application program interface (API) for specifying which software agents on the edge node or data shipper agents are specified. Preferably, a common schema is used for selecting software agents on the edge node or data shipper agents.

After installation, the method includes a step 1006 of connecting with the software agents on the edge node. For the data shipper agents connecting can be enrolling data shipper agents which are installed on edge nodes. Again, this process can include the token exchange and verification processes disclosed above. After the data shipper agents are enrolled or a connection made with the software agents on the edge node, configurations can be pushed down to the data shipper and software agents on the edge node.

In various embodiments, the configurations for the data shipper agents are created by users. Thus, in some instances, the method further includes a step (not shown) of providing the one or more GUIs, which can be utilized by a user to establish configurations for data shipper and software agents on the edge node as disclosed herein.

In some embodiments, the method includes a step (not shown) of receiving selections of one or more tags for the data shipper agents through the GUIs. To be sure, each of the one or more tags may be defined by services assigned to the data shipper agents by a user. Thus, the method can include a step (not shown) of receiving selections of services which can be linked to the one or more tags. As noted above, these could include input, output, frontend, and other similar service types.

The method includes a step 1010 of receiving configurations for at least one of the services of a first one of the data shipper agents through one of the one or more GUIs. To be sure configurations of the services are modifiable through the one or more GUIs using a configuration application programming interface (API). The configurations can be pushed to the first one of the data shipper or software agents on the edge node using the configuration APIs as well. Preferably, a common scheme is used with the API for the configuration of the data shipper and software agents on the edge node.

Next, the method includes a step 1008 of receiving and configuring the first one of the data shipper and/or software agents on the edge node using the configurations. That is, the data shipper and/or software agents on the edge node can receive and implement the configurations without user intervention. Once the configurations to the first one of the data shipper or software agents on the edge node has occurred, the configurations can be pushed to other similar data shipper or software agents on the edge node installed on the same or other edge nodes. In some embodiments, the method includes automatically reconfiguring configurations to other ones of the data shipper or software agents on the edge node automatically using the configurations selected for the first one of the data shipper agents. This reconfiguration includes changes to settings for services and/or tags of the additional data shipper agents.

Next, the method includes a step 1010 of receiving data from one or more of the data shippers or software agents on the edge node. The data is received by the single agent. In some embodiments, the single agent receives some of the data from the software agents on the edge node and the central management and data virtual system receives some of the data.

Next, the method includes a step 1012 of storing the data. The storage can be in a single file with tags for each type of data, node, or the source agent. Alternatively, the data can be stored in multiple files by type, source, node, agent type, or combination thereof.

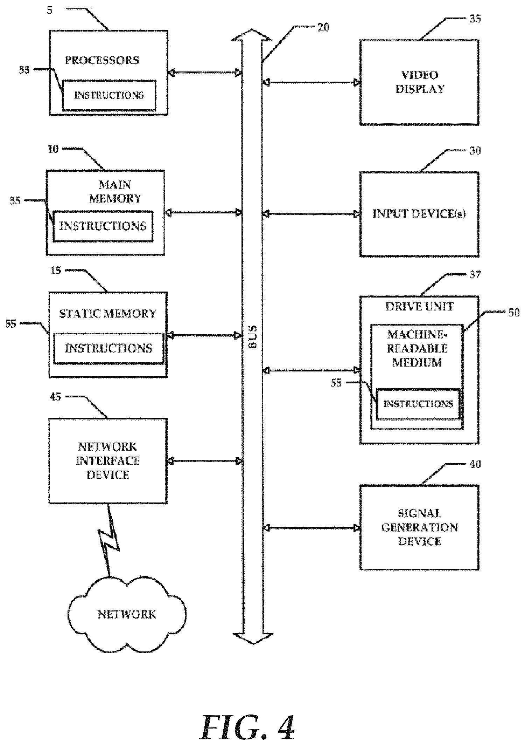

FIG. 4 is a diagrammatic representation of an example machine in the form of a computer system 1, within which a set of instructions for causing the machine to perform any one or more of the methodologies discussed herein may be executed. In various example embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be, for example, a base station, a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1 includes a processor or multiple processors 5 (e.g., a central processing unit (CPU), a graphics processing unit (GPU), or both), and a main memory 10 and static memory 15, which communicate with each other via a bus 20. The computer system 1 may further include a video display 35 (e.g., a liquid crystal display (LCD)). The computer system 1 may also include an alpha-numeric input device(s) 30 (e.g., a keyboard), a cursor control device (e.g., a mouse), a voice recognition or biometric verification unit (not shown), a drive unit 37 (also referred to as disk drive unit), a signal generation device 40 (e.g., a speaker), and a network interface device 45. The computer system 1 may further include a data encryption module (not shown) to encrypt data.

The drive unit 37 includes a computer or machine-readable medium 50 on which is stored one or more sets of instructions and data structures (e.g., instructions 55) embodying or utilizing any one or more of the methodologies or functions described herein. The instructions 55 may also reside, completely or at least partially, within the main memory 10 and/or within static memory 15 and/or within the processors 5 during execution thereof by the computer system 1. The main memory 10, static memory 15, and the processors 5 may also constitute machine-readable media.

The instructions 55 may further be transmitted or received over a network via the network interface device 45 utilizing any one of a number of well-known transfer protocols (e.g., Hyper Text Transfer Protocol (HTTP)). While the machine-readable medium 50 is shown in an example embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example embodiments described herein may be implemented in an operating environment comprising software installed on a computer, in hardware, or in a combination of software and hardware.

Not all components of the computer system 1 are required and thus portions of the computer system 1 can be removed if not needed, such as Input/Output (I/O) devices (e.g., input device(s) 30). One skilled in the art will recognize that the Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized in order to implement any of the embodiments of the disclosure as described herein.

The description of the present technology has been presented for purposes of illustration and description, but is not intended to be exhaustive or limited to the present technology in the form disclosed. Many modifications and variations will be apparent to those of ordinary skill in the art without departing from the scope of the present technology. Exemplary embodiments were chosen and described in order to best explain the principles of the present technology and its practical application, and to enable others of ordinary skill in the art to understand the present technology for various embodiments with various modifications as are suited to the particular use contemplated.

Aspects of the present technology are described above with reference to flowchart illustrations and/or block diagrams of methods, apparatus (systems) and computer program products according to embodiments of the present technology. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present technology. In this regard, each block in the flowchart or block diagrams may represent a module, section, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" or "according to one embodiment" (or other phrases having similar import) at various places throughout this specification are not necessarily all referring to the same embodiment. Furthermore, the particular features, structures, or characteristics may be combined in any suitable manner in one or more embodiments. Furthermore, depending on the context of discussion herein, a singular term may include its plural forms and a plural term may include its singular form. Similarly, a hyphenated term (e.g., "on-demand") may be occasionally interchangeably used with its non-hyphenated version (e.g., "on demand"), a capitalized entry (e.g., "Software") may be interchangeably used with its non-capitalized version (e.g., "software"), a plural term may be indicated with or without an apostrophe (e.g., PE's or PEs), and an italicized term (e.g., "N+1") may be interchangeably used with its non-italicized version (e.g., "N+1"). Such occasional interchangeable uses shall not be considered inconsistent with each other.

Also, some embodiments may be described in terms of "means for" performing a task or set of tasks. It will be understood that a "means for" may be expressed herein in terms of a structure, such as a processor, a memory, an I/O device such as a camera, or combinations thereof. Alternatively, the "means for" may include an algorithm that is descriptive of a function or method step, while in yet other embodiments the "means for" is expressed in terms of a mathematical formula, prose, or as a flow chart or signal diagram.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/ or "comprising," when used in this specification, specify the presence of stated features, integers, steps, operations, elements, and/or components, but do not preclude the presence or addition of one or more other features, integers, steps, operations, elements, components, and/or groups thereof.

It is noted that the terms "coupled," "connected", "connecting," "electrically connected," etc., are used interchangeably herein to generally refer to the condition of being electrically/electronically connected. Similarly, a first entity is considered to be in "communication" with a second entity (or entities) when the first entity electrically sends and/or receives (whether through wireline or wireless means) information signals (whether containing data information or non-data/control information) to the second entity regardless of the type (analog or digital) of those signals. It is further noted that various figures (including component diagrams) shown and discussed herein are for illustrative purpose only, and are not drawn to scale.

If any disclosures are incorporated herein by reference and such incorporated disclosures conflict in part and/or in whole with the present disclosure, then to the extent of conflict, and/or broader disclosure, and/or broader definition of terms, the present disclosure controls. If such incorporated disclosures conflict in part and/or in whole with one another, then to the extent of conflict, the later-dated disclosure controls.

While various embodiments have been described above, it should be understood that they have been presented by way of example only, and not limitation. The descriptions are not intended to limit the scope of the invention to the particular forms set forth herein. To the contrary, the present descriptions are intended to cover such alternatives, modifications, and equivalents as may be included within the scope of the invention as defined by the appended claims and otherwise appreciated by one of ordinary skill in the art. Thus, the breadth and scope of a preferred embodiment should not be limited by any of the above-described exemplary embodiments.

## Claims

1. A system, comprising:
at least one edge node (110A-110N) configured with a plurality of software application services to collect data and transmit the data from the at least one edge node (110A-110N); and
a single agent software application (109) installed on a central management server (108) configured to:
provide an application programming interface, API (109A), to configure and manage the plurality of software application services on the at least one edge node (110A-110N), wherein the API (109A) provides a common schema to configure and manage the plurality of software application services on the at least one edge node (110A-110N); and
receive the collected data from the at least one edge node (110A-110N).

2. The system according to claim 1, wherein the data collected by the plurality of software application services comprises at least one of log file data, metric data, network data, trace data, synthetics data, security data, event log data, audit data, uptime monitoring data, or serverless shipper data, and optionally wherein the common schema includes one or more of hostname, network address, and data shipper version.

3. The system according to claim 1, wherein the plurality of software application services includes at least one software agent (114A-N).

4. The system according to claim 1, wherein the plurality of software application services includes at least one data shipper agent (112A-112F).

5. The system according to claim 4, wherein the at least one data shipper agent (112A-112F) is enrolled through a token exchange process; and
where one or more tags for the at least one data shipper agent (112A-112F), each of the one or more tags being defined by one or more services provided by the least one data shipper agent (112A-112F), the one or more tags linking the one or more services with the plurality of software application services.

6. The system according to claim 5, wherein the API is configured to receive a specified list comprising the at least one data shipper agent (112A-112F) along with parameters of the at least one data shipper agent (112A-112F) comprising at least one of a data shipper agent name, a data shipper agent type, a name for the one or more tags, the data shipper version, an event rate, or a last configuration update time, optionally wherein the token exchange process comprises the central management server being further configured to:
provide a secret token to the at least one data shipper agent (112A-112F);
establish an object for the at least one data shipper agent (112A-112F) that is unverified and unable to access the API;
receive the secret token from the at least one data shipper agent (112A-112F);
verify the secret token; and
allow the at least one data shipper agent (112A-112F) to utilize the configuration API.

7. The system according to claim 1, further comprising a service provider system (102), the service provider system (102) being configured to provide one or more service provider system services using the collected data of the plurality of software application services.

8. The system according to claim 3, comprising:
a plurality of software agents (114A-N) on the at least one edge node (110A-110N), wherein each of the plurality of software agents (114A-N) on the at least one edge node (110A-110N) are configured to collect data from the at least one edge node (110A-110N) and provide the same to a service provider system (102); and
the agent central management server (108) configured to provide the API (109A) to manage configurations for the plurality of software agents (114A-N) on the at least one edge node (110A-110N), wherein the API (109A) enables the system to:
enroll the plurality of software agents (114A-N) on the at least one edge node (110A-110N);
establish one or more tags for the plurality of software agents (114A-N) on the at least one edge node (110A-110N), each of the one or more tags representing one or more services assigned to the plurality of software agents (114A-N) on the at least one edge node (110A-110N), configurations of the services being modifiable through the API (109A);
receive configurations for at least one of the services of one of the plurality of software agents (114A-N) through the API (109A); and
automatically propagate the configurations to other ones of the plurality of software agents.

9. The system according to claim 8, wherein during enrollment, the API (109A) is configured to receive a hostname, network address, and software agent version for the plurality of software agents (114A-N) on the at least one edge node (110A-110N), and/or wherein the plurality of software agents (114A-N) on the at least one edge node (110A-110N) include a data shipper agent.

10. A computer-implemented method for single agent management edge data flow software application services, the method comprising:
providing, by a single agent software application (109) installed on a central management server (108), an application programming interface, API (109A);
receiving a selection of a plurality of software application services configured on at least one edge node (110A-110N) from the API (109A), the plurality of software application services for collecting data and transmitting the data from the at least one edge node (110A-110N);
connecting with plurality of software application services on the at least one edge node (110A-110N) over a network (118); receiving configurations for the plurality of software application services through the API (109A);
receiving data from the plurality of software application services; and
storing the data in a file;
wherein the API (109A) provides a common schema to configure and manage the plurality of software application services on the at least one edge node (110A-110N).

11. The method according to claim 10, wherein the plurality of software application services includes at least one data shipper agent (112A-112F), and optionally wherein connecting with the plurality of software application services includes enrolling the at least one data shipper agent (112A-112F).

12. The method according to claim 11 further including:
receiving selections of one or more tags for one of the data shipper agents (112A-112F) through the API, each of the one or more tags representing one or more services assigned to the at least one data shipper agents (112A-112F) and, optionally, wherein receiving a selection of a plurality of software application services on the at least one edge node(110A-110N) utilizes a common schema through the API.

13. The method according to claim 10, wherein receiving configurations for the plurality of software application services utilizes a common schema through the API.

14. The method according to claim 12, further comprising collecting and displaying a hostname, network address, and data shipper version for the at least one data shipper agents (112A-112F).

15. The method according to claim 14, further comprising:
providing a secret token to the at least one data shipper agents (112A-112F);
establishing an object for each of the at least one data shipper agents (112A-112F) that is unverified and unable to access the API;
receiving the secret token from the at least one data shipper agents (112A-112F);
verifying the secret token; and
allowing the at least one data shipper agents (112A-112F) to utilize the configuration API based on the verification.

## Patentansprüche

1. System, umfassend:
mindestens einen Kantenknoten (110A-110N), der mit einer Vielzahl von Software-Anwendungsdiensten konfiguriert ist, um Daten zu sammeln und die Daten von dem mindestens einen Kantenknoten (110A-110N) zu übertragen; und
eine Einzelagenten-Softwareanwendung (109), die auf einem zentralen Verwaltungsserver (108) installiert ist und konfiguriert ist zum:
Bereitstellen einer Anwendungsprogrammierschnittstelle, API (109A), um die Vielzahl von Softwareanwendungsdiensten auf dem mindestens einen Kantenknoten (110A-110N) zu konfigurieren und zu verwalten, wobei die API (109A) ein gemeinsames Schema bereitstellt, um die Vielzahl von Softwareanwendungsdiensten auf dem mindestens einen Kantenknoten (110A-110N) zu konfigurieren und zu verwalten; und
Empfangen der gesammelten Daten von dem mindestens einen Kantenknoten (110A-110N).

2. System nach Anspruch 1, wobei die von der Vielzahl von Softwareanwendungsdiensten gesammelten Daten mindestens eines von Protokolldateidaten, Metrikdaten, Netzwerkdaten, Trace-Daten, Synthetics-Daten, Sicherheitsdaten, Ereignisprotokolldaten, Audit-Daten, Uptime-Überwachungsdaten oder Serverless-Shipper-Daten umfassen, und optional wobei das gemeinsame Schema eines oder mehrere von Hostname, Netzwerkadresse und Daten-Shipper-Version umfasst.

3. System nach Anspruch 1, wobei die Vielzahl von Softwareanwendungsdiensten mindestens einen Softwareagenten (114A-N) einschließt.

4. System nach Anspruch 1, wobei die Vielzahl von Softwareanwendungsdiensten mindestens einen Daten-Shipper-Agenten (112A-112F) einschließt.

5. System nach Anspruch 4, wobei der mindestens eine Daten-Shipper-Agent (112A-112F) durch einen Token-Austausch-Prozess angemeldet wird; und
wobei ein oder mehrere Tags für den mindestens einen Daten-Shipper-Agenten (112A-112F), wobei jeder der ein oder mehreren Tags durch einen oder mehrere Dienste definiert wird, die von dem mindestens einen Daten-Shipper-Agenten (112A-112F) bereitgestellt werden, wobei die ein oder mehreren Tags die ein oder mehreren Dienste mit der Vielzahl von Softwareanwendungsdiensten verknüpfen.

6. System nach Anspruch 5, wobei die API konfiguriert ist, um eine spezifizierte Liste zu empfangen, die den mindestens einen Daten-Shipper-Agenten (112A-112F) zusammen mit Parametern des mindestens einen Daten-Shipper-Agenten (112A-112F) umfasst, die mindestens eines von einem Daten-Shipper-Agenten-Namen, einem Daten-Shipper-Agenten-Typ, einem Namen für die eine oder mehreren Markierungen, der Daten-Shipper-Version, einer Ereignisrate oder einer letzten Konfigurationsaktualisierungszeit umfassen, optional wobei der Token-Austausch-Prozess umfasst, dass der zentrale Verwaltungsserver ferner konfiguriert ist zum:
Bereitstellen eines geheimen Tokens an den mindestens einen Daten-Shipper-Agenten (112A-112F);
Erstellen eines Objekts für den mindestens einen Daten-Shipper-Agenten (112A-112F), der nicht verifiziert ist und nicht auf die API zugreifen kann;
Empfangen des geheimen Tokens von dem mindestens einen Daten-Shipper-Agenten (112A-112F);
Verifizieren des geheimen Tokens; und
Ermöglichen für den mindestens einen Daten-Shipper-Agenten (112A-112F), die Konfigurations-API zu nutzen.

7. System nach Anspruch 1, ferner umfassend ein Dienstanbietersystem (102), wobei das Dienstanbietersystem (102) konfiguriert ist, um einen oder mehrere Dienstanbietersystemdienste unter Verwendung der gesammelten Daten der Vielzahl von Softwareanwendungsdiensten bereitzustellen.

8. System nach Anspruch 3, umfassend:
eine Vielzahl von Software-Agenten (114A-N) auf dem mindestens einen Kantenknoten (110A-110N), wobei jeder der Vielzahl von Software-Agenten (114A-N) auf dem mindestens einen Kantenknoten (110A-110N) konfiguriert ist, um Daten von dem mindestens einen Kantenknoten (110A-110N) zu sammeln und diese an ein Dienstanbietersystem (102) zu bereitzustellen; und
den zentralen Verwaltungsserver (108) für Agenten, der konfiguriert ist, um die API (109A) zur Verwaltung von Konfigurationen für die Vielzahl von Software-Agenten (114A-N) auf dem mindestens einen Kantenknoten (110A-110N) bereitzustellen, wobei die API (109A) das System befähigt zum:
Anmelden der Vielzahl von Software-Agenten (114A-N) auf dem mindestens einen Kantenknoten (110A-110N);
Erstellen eines oder mehrerer Tags für die Vielzahl von Software-Agenten (114A-N) auf dem mindestens einen Kantenknoten (110A-110N), wobei jeder der ein oder mehreren Tags einen oder mehrere Dienste repräsentiert, die mit der Vielzahl von Software-Agenten (114A-N) auf dem mindestens einen Kantenknoten (110A-110N) verknüpft sind, wobei Konfigurationen der Dienste durch die API (109A) modifizierbar sind;
Empfangen von Konfigurationen für mindestens einen der Dienste eines der Vielzahl von Software-Agenten (114A-N) über die API (109A); und
automatisches Propagieren der Konfigurationen zu anderen der Vielzahl von Software-Agenten.

9. System nach Anspruch 8, wobei während der Anmeldung die API (109A) konfiguriert ist, um einen Hostnamen, eine Netzwerkadresse und eine Software-Agent-Version für die Vielzahl von Software-Agenten (114A-N) auf dem mindestens einen Kantenknoten (110A-110N) zu empfangen, und/oder wobei die Vielzahl von Software-Agenten (114A-N) auf dem mindestens einen Kantenknoten (110A-110N) einen Daten-Shipper-Agenten einschließen.

10. Computerimplementiertes Verfahren zur Verwaltung von Kanten-Datenfluss-Softwareanwendungsdiensten mit einem einzigen Agenten, wobei das Verfahren umfasst:
Bereitstellen, durch eine einzige Agenten-Softwareanwendung (109), die auf einem zentralen Verwaltungsserver (108) installiert ist, einer Anwendungsprogrammierschnittstelle, API (109A);
Empfangen einer Auswahl einer Vielzahl von Softwareanwendungsdiensten, die auf mindestens einem Kantenknoten (110A-110N) von der API (109A) konfiguriert sind, wobei die Vielzahl von Softwareanwendungsdiensten zum Sammeln von Daten und Übertragen der Daten von dem mindestens einen Kantenknoten (110A-110N) dient;
Verbinden mit einer Vielzahl von Softwareanwendungsdiensten auf dem mindestens einen Kantenknoten (110A-110N) über ein Netzwerk (118); Empfangen von Konfigurationen für die Vielzahl von Softwareanwendungsdiensten über die API (109A);
Empfangen von Daten von der Vielzahl von Softwareanwendungsdiensten; und
Speichern der Daten in einer Datei;
wobei die API (109A) ein gemeinsames Schema bereitstellt, um die Vielzahl von Softwareanwendungsdiensten auf dem mindestens einen Kantenknoten (110A-110N) zu konfigurieren und zu verwalten.

11. Verfahren nach Anspruch 10, wobei die Vielzahl von Softwareanwendungsdiensten mindestens einen Daten-Shipper-Agenten (112A-112F) einschließt, und optional wobei das Verbinden mit der Vielzahl von Softwareanwendungsdiensten das Anmelden des mindestens einen Daten-Shipper-Agenten (112A-112F) einschließt.

12. Verfahren nach Anspruch 11, ferner einschließend:
Empfangen von Auswahlen eines oder mehrerer Tags für einen der Daten-Shipper-Agenten (112A-112F) durch die API, wobei jeder der einen oder mehreren Tags einen oder mehrere Dienste repräsentiert, die mit dem mindestens einen Daten-Shipper-Agenten (112A-112F) verknüpft sind, und optional, wobei das Empfangen einer Auswahl einer Vielzahl von Softwareanwendungsdiensten auf dem mindestens einen Kantenknoten (110A-110N) ein gemeinsames Schema über die API verwendet.

13. Verfahren nach Anspruch 10, wobei das Empfangen von Konfigurationen für die Vielzahl von Softwareanwendungsdiensten ein gemeinsames Schema über die API verwendet.

14. Verfahren nach Anspruch 12, ferner umfassend das Sammeln und Anzeigen eines Hostnamens, einer Netzwerkadresse und einer Daten-Shipper-Version für die mindestens einen Daten-Shipper-Agenten (112A-112F).

15. Verfahren nach Anspruch 14, ferner umfassend:
Bereitstellen eines geheimen Tokens für die mindestens einen Daten-Shipper-Agenten (112A-112F);
Erstellen eines Objekts für jeden der mindestens einen Daten-Shipper-Agenten (112A-112F), der nicht verifiziert ist und nicht auf die API zugreifen kann;
Empfangen des geheimen Tokens von dem mindestens einen Daten-Shipper-Agenten (112A-112F);
Verifizieren des geheimen Tokens; und
Ermöglichen für den mindestens einen Daten-Shipper-Agenten (112A-112F), die Konfigurations-API basierend auf der Verifikation zu nutzen.

## Revendications

1. Système, comprenant :
au moins un nœud d'extrémité (110A-110N) configuré avec une pluralité de services d'application logicielle pour collecter des données et transmettre les données à partir de l'au moins un nœud d'extrémité (110A-110N) ; et
une application logicielle d'agent unique (109) installée sur un serveur de gestion central (108) configurée pour :
fournir une interface de programmation d'applications, API (109A), pour configurer et gérer la pluralité de services d'application logicielle ₛᵤᵣl'au moins un nœud d'extrémité (110A-110N), dans lequel l'API (109A) fournit un schéma commun pour configurer et gérer la pluralité de services d'application logicielle ₛᵤᵣl'au moins un nœud d'extrémité (110A-110N) ; et
recevoir les données collectées à partir de l'au moins un nœud d'extrémité (110A-110N).

2. Système selon la revendication 1, dans lequel les données collectées par la pluralité de services d'application logicielle comprennent au moins l'un parmi des données de fichier journal, des données de métrique, des données de réseau, des données de trace, des données synthétiques, des données de sécurité, des données de journal d'événements, des données d'audit, des données de surveillance de temps de fonctionnement, ou des données d'expéditeur sans serveur, et éventuellement dans lequel le schéma commun comporte un ou plusieurs parmi nom d'hôte, l'adresse réseau et la version de l'expéditeur de données.

3. Système selon la revendication 1, dans lequel la pluralité de services d'application logicielle comporte au moins un agent logiciel (114A-N).

4. Système selon la revendication 1, dans lequel la pluralité de services d'application logicielle comporte au moins un agent d'expéditeur de données (112A-112F).

5. Système selon la revendication 4, dans lequel l'au moins un agent d'expéditeur de données (112A-112F) est inscrit par le biais d'un processus d'échange de jetons ; et
où une ou plusieurs étiquettes pour l'au moins un agent d'expéditeur de données (112A-112F), chacune parmi la ou les étiquettes étant définie par un ou plusieurs services fournis par l'au moins un agent d'expéditeur de données (112A-112F), la ou les étiquettes reliant le ou les services à la pluralité de services d'application logicielle.

6. Système selon la revendication 5, dans lequel l'API est configurée pour recevoir une liste spécifiée comprenant l'au moins un agent d'expéditeur de données (112A-112F) ainsi que des paramètres de l'au moins un agent d'expéditeur de données (112A-112F) comprenant au moins l'un parmi un nom d'agent d'expéditeur de données, un type d'agent d'expéditeur de données, un nom pour la ou les étiquettes, la version de l'expéditeur de données, un taux d'événement ou l'heure de la dernière mise à jour de configuration, éventuellement dans lequel le processus d'échange de jetons comprend le serveur de gestion central étant en outre configuré pour :
fournir un jeton secret à l'au moins un agent d'expéditeur de données (112A à 112F) ;
établir un objet pour l'au moins un agent d'expéditeur de données (112A-112F) qui n'est pas vérifié et ne peut pas accéder à l'API ;
recevoir le jeton secret en provenance de l'au moins un agent d'expéditeur de données (112A-112F) ;
vérifier le jeton secret ; et
permettre à l'au moins un agent d'expéditeur de données (112A-112F) d'utiliser la configuration API.

7. Système selon la revendication 1, comprenant en outre un système de fournisseur de services (102), le système de fournisseur de services (102) étant configuré pour fournir un ou plusieurs services de système de fournisseur de services à l'aide des données collectées de la pluralité de services d'application logicielle.

8. Système selon la revendication 3 dans lequel :
une pluralité d'agents logiciels (114A-N) sur l'au moins un nœud d'extrémité (110A à 110N), dans lequel chacun de la pluralité d'agents logiciels (114A-N) sur l'au moins un nœud d'extrémité (110A-110N) est configuré pour collecter des données provenant de l'au moins un nœud d'extrémité (110A-110N) et les fournir à un système de fournisseur de services (102) ; et
le serveur de gestion central d'agent (108) configuré pour fournir l'API (109A) afin de gérer les configurations pour la pluralité d'agents logiciels (114A-N) sur l'au moins un nœud de périphérie (110A-110N), dans lequel l'API (109A) permet au système de :
inscrire la pluralité d'agents logiciels (114A-N) sur l'au moins un nœud d'extrémité (110A-110N) ;
établir une ou plusieurs étiquettes pour la pluralité d'agents logiciels (114A-N) sur l'au moins un nœud d'extrémité (110A-110N), chacune de la ou des étiquettes représentant un ou plusieurs services attribués à la pluralité d'agents logiciels (114A-N) sur l'au moins un nœud d'extrémité (110A-110N), des configurations des services étant modifiables par le biais de l'API (109A) ;
recevoir des configurations pour au moins l'un des services de l'un de la pluralité d'agents logiciels (114A-N) par le biais de l'API (109A) ; et
propager automatiquement les configurations à d'autres agents de la pluralité d'agents logiciels.

9. Système selon la revendication 8, dans lequel, lors de l'inscription, l'API (109A) est configurée pour recevoir un nom d'hôte, une adresse réseau et une version d'agent logiciel pour la pluralité d'agents logiciels (114A-N) sur l'au moins un nœud d'extrémité (110A-110N), et/ou dans lequel la pluralité d'agents logiciels (114A-N) sur l'au moins un nœud d'extrémité (110A-110N) comportent un agent d'expéditeur de données.

10. Procédé mis en œuvre par ordinateur pour des services d'application logicielle de flux de données de périphérie de gestion à agent unique, le procédé comprenant :
la fourniture, par une application logicielle d'agent unique (109) installée sur un serveur de gestion central (108), d'une interface de programmation d'applications, API (109A) ;
la réception d'une sélection d'une pluralité de services d'application logicielle configurés sur au moins un nœud d'extrémité (110A-110N) à partir de l'API (109A), la pluralité de services d'application logicielle permettant de collecter des données et de transmettre les données à partir de l'au moins un nœud d'extrémité (110A-110N) ;
la connexion avec une pluralité de services d'application logicielle ₛᵤᵣl'au moins un nœud d'extrémité (110A-110N) sur un réseau (118) ; la réception de configurations pour la pluralité de services d'application logicielle par le biais de l'API (109A) ;
la réception de données en provenance de la pluralité de services d'application logicielle ; et
le stockage des données dans un fichier ;
dans lequel l'API (109A) fournit un schéma commun pour configurer et gérer la pluralité de services d'application logicielle ₛᵤᵣl'au moins un nœud d'extrémité (110A-110N).

11. Procédé selon la revendication 10, dans lequel la pluralité de services d'application logicielle comporte au moins un agent expéditeur de données (112A-112F), et éventuellement dans lequel la connexion à la pluralité de services d'application logicielle comporte l'inscription de l'au moins un agent expéditeur de données (112A-112F).

12. Procédé selon la revendication 11, comprenant en outre :
la réception de sélections d'une ou plusieurs étiquettes pour l'un des agents d'expéditeur de données (112A à 112F) par le biais de l'API, chacune des étiquettes représentant un ou plusieurs services attribués à l'au moins un agent d'expéditeur de données (112A à 112F) et, éventuellement, dans lequel la réception d'une sélection d'une pluralité de services d'application logicielle ₛᵤᵣl'au moins un nœud d'extrémité (110A à 110N) utilise un schéma commun par le biais de l'API.

13. Procédé selon la revendication 10, dans lequel la réception de configurations pour la pluralité de services d'application logicielle utilise un schéma commun par le biais de l'API.

14. Procédé selon la revendication 12, comprenant en outre la collecte et l'affichage d'un nom d'hôte, d'une adresse réseau et d'une version d'expéditeur de données pour l'au moins un agent d'expéditeur de données (112A-112F).

15. Procédé selon la revendication 14, comprenant en outre :
la fourniture d'un jeton secret à l'au moins un agent expéditeur de données (112A-112F) ;
l'établissement d'un objet pour chacun des au moins un agent d'expéditeur de données (112A à 112F) qui n'est pas vérifié et ne peut pas accéder à l'API ;
la réception du jeton secret en provenance de l'au moins un agent d'expéditeur de données (112A à 112F) ;
la vérification du jeton secret ; et
le fait de permettre à l'au moins un agent d'expéditeur de données (112A-112F) d'utiliser la configuration API sur la base de la vérification.
